# EUROPÄISCHE PATENTSCHRIFT

(11) **EP 4 088 042 B1**
(45) Veröffentlichungstag und Bekanntmachung des Hinweises auf die Patenterteilung: **08.01.2025**
(21) Anmeldenummer: 20816892.2
(22) Anmeldetag: 16.11.2020
(51) Int. Cl.: F16F 15/12, F16F 15/123, F16F 15/129, F16F 15/131, F16F 15/134, F16F 15/139

(54) **DREHSCHWINGUNGSDÄMPFER MIT DREHMOMENTBEGRENZER, DER NASSE REIBBELÄGE UND STUFENNIETEN EINSCHLIESST UND DAS ENTSPRECHENDE EINBAUVERFAHREN**
TORSIONAL VIBRATION DAMPER WITH TORQUE LIMITER, CONTAINING WET FRICTION LININGS AND STEP RIVETS, AND THE CORRESPONDING INSTALLATION PROCEDURE
AMORTISSEUR DE VIBRATIONS TORSIONNELLES ÉQUIPÉ D'UN LIMITEUR DE COUPLE COMPORTANT DES RIVETS GOUJONS ET DES GARNITURES DE FRICTION HUMIDES,AINSI QUE LE PROCÉDÉ D'INSTALLATION CORRESPONDANT

(30) Priorität: 10.01.2020 DE 102020100456
(43) Veröffentlichungstag der Anmeldung: 16.11.2022
(73) Patentinhaber: Schaeffler Technologies AG & Co. KG, 91074 Herzogenaurach (DE)
(72) Erfinder: WEISENBORN, Roman, 77855 Achern (DE); STRASSER, Pascal, 67250 Aschbach (FR)
(86) Internationale Anmeldenummer: PCT/DE2020/100972
(87) Internationale Veröffentlichungsnummer: WO 2021/139849

(56) Entgegenhaltungen:
- DE-A1- 102015 203 475
- DE-A1- 102016 204 261

## Beschreibung

Die Erfindung betrifft einen Drehschwingungsdämpfer eines brennkraftmaschinengetriebenen Kraftfahrzeugs, der als ein Zweimassenschwungrad aufgebaut ist und ein an einer Kurbelwelle befestigtes Primärteil sowie ein einer Abtriebsseite zugeordnetes Sekundärteil umfasst, die gemeinsam um eine Drehachse drehbar und relativ zueinander verdrehbar angeordnet sind und zwischen denen im Drehmomentfluss eine Federdämpfereinrichtung angeordnet ist, wobei das mehrteilig aufgebaute Sekundärteil einen Drehmomentbegrenzer einschließt, dessen Trägerflansch über zumindest einen Reibbelag und eine Führungsscheibe mittelbar mit einer Abtriebsnabe gekoppelt ist.

Drehschwingungsdämpfer, ausgelegt als Zweimassenschwungrad, sind zur Dämpfung von Drehschwingungen in einem Antriebsstrang von Kraftfahrzeugen eingesetzt. Auslöser von Drehschwingungen ist die periodische Verbrennungstaktung der Hubkolbenbrennkraftmaschine, die in Kombination mit der Zündfolge zu einer Drehungleichförmigkeit führt, welche von der Kurbelwelle in den Antriebsstrang eingeleitet wird. Die auf den Antriebsstrang des Kraftfahrzeugs übertragene, im Fahrgastraum des Kraftfahrzeugs Schwingungen und / oder Geräusche verursachende Drehungleichförmigkeit führt zu Komforteinbußen. Eine Dämpfung der von der Brennkraftmaschine ausgehenden Drehungleichförmigkeit durch den Drehschwingungsdämpfer verbessert den Fahrkomfort.

In Kraftfahrzeugen, die durch Brennkraftmaschinen angetrieben werden, wird durch die Funktionsweise der Brennkraftmaschine von deren Kurbelwelle ein nicht kontinuierliches Drehmoment in Form von Drehschwingungen auf den Antriebsstrang übertragen. Zur Dämpfung der Drehschwingungen sind aus dem Stand der Technik als Zweimassenschwungräder (ZMS) aufgebaute Drehschwingungsdämpfer bekannt. Beispielsweise zeigt die DE 10 2012 202 255 A1 einen derartigen zur Tilgung oder Dämpfung einsetzbaren Drehschwingungsdämpfer, der in Antriebssträngen zwischen der Kurbelwelle der Brennkraftmaschine und beispielsweise einer dem Schaltgetriebe vorgelagerten Schalttrennkupplung einsetzbar ist.

Außerdem werden Drehschwingungsdämpfer vielfach durch einen Drehmomentbegrenzer (DMB) ergänzt, der insbesondere nachgeordnete Bauelemente des Antriebsstrangs, beispielsweise ein Getriebe, vor auftretenden Drehmomentspitzen schützt bzw. das übertragbare Drehmoment des Drehschwingungsdämpfers begrenzt. Ein solcher Drehschwingungsdämpfer ist in der DE 10 2017 119 375 A1 offenbart. Dieser umfasst ein um eine Drehachse verdrehbar angeordnetes Primärteil und ein gegenüber diesem entgegen der Wirkung einer in einer Ringkammer des Primärteils untergebrachten Federdämpfereinrichtung begrenzt verdrehbar angeordnetes Sekundärteil. Zwischen einer Abtriebsnabe des Sekundärteils und der Federdämpfereinrichtung ist in einer Ringkammer gemeinsam mit der Federdämpfereinrichtung ein Drehmomentbegrenzer integriert.

Ein üblicher konstruktiver Aufbau des Drehschwingungsdämpfers sieht vor, dass das Primärteil antriebsseitig verschraubt ist, wobei die Befestigungsschrauben sowohl durch Öffnungen des Sekundärteils als auch durch Bohrungen des Primärteils des Drehschwingungsdämpfers eingeführt werden. Bei der Erstmontage fluchten die Öffnungen mit den Bohrungen, so dass die Befestigungsschrauben ungehindert eingesetzt werden können. Falls im Betriebszustand der als Rutschkupplung wirkende Drehmomentbegrenzer aufgrund eines Überschreitens eines eingestellten maximalen Drehmoments aktiviert bzw. ausgelöst wird, verdreht sich ein Bauteil des Sekundärteils relativ zum Primärteil des Drehschwingungsdämpfers. Damit verbunden stellt sich ein Versatz zwischen den Öffnungen und den Bohrungen ein, wodurch aufgrund fehlender Flucht eine Demontage des Drehschwingungsdämpfers nicht möglich ist oder einen großen Montageaufwand erfordert.

Das Dokument DE 10 2016 204261 A1 offenbart einen Drehschwingungsdämpfer entsprechend dem Oberbegriff des Anspruchs 1.

Es ist die Aufgabe der vorliegenden Erfindung, einen baulich und / oder funktional verbesserten Drehschwingungsdämpfer zu schaffen, der nach einem ausgelösten Drehmomentbegrenzer eine vereinfachte Demontage und Wiedermontage ermöglicht.

Die zuvor genannte Aufgabe wird erfindungsgemäß durch einen die Merkmale des Anspruchs 1 einschließenden Drehschwingungsdämpfer gelöst. Bevorzugte Ausgestaltungen der Erfindung sind in den Unteransprüchen und der nachfolgenden Beschreibung angegeben.

Der erfindungsgemäße Aufbau sieht vor, dass die Abtriebsnabe an einem über einen Trägerring mit dem Primärteil verbundenen Reibring unmittelbar oder mittelbar axial zentriert abgestützt und über eine Verzahnung mit einer der Führungsscheibe vorgelagerten, verzahnten Blechscheibe formschlüssig verbunden ist, wobei eine Axialverschiebung der Abtriebsnabe gegen eine Federkraft zumindest einer Tellerfeder die Verzahnung löst und eine Drehmomentübertragung des Drehschwingungsdämpfers unterbricht und die Abtriebsnabe anschließend bis zu einer Lageübereinstimmung von Öffnungen der Abtriebsnabe mit Bohrungen des Primärteils verdrehbar ist, die zur Aufnahme von Schrauben zur Befestigung des Drehschwingungsdämpfers bestimmt sind.

Der konstruktive Aufbau ermöglicht ein Lösen der Verzahnung mittels Ziehen bzw. einer Axialverschiebung der Abtriebsnabe entgegen einer Druckkraft der Tellerfeder, deren Zahnprofil im Betriebszustand in der drehmomentübertragenden Position formschlüssig in eine Gegenverzahnung der Blechscheibe verrastet. In einer axial von der Blechscheibe entfernten, zu der Verzahnung versetzten Lage ist die Abtriebsnabe relativ zu der Blechscheibe verdrehbar. Vorteilhaft ist die Abtriebsnabe soweit verdrehbar, bis sich eine übereinstimmende Lage bzw. ein gleiches Lochbild zwischen den Öffnungen der Abtriebsnabe und den Bohrungen im Primärteil bzw. den darin eingesetzten Befestigungsschrauben einstellt, mit denen der Drehschwingungsdämpfer an der Kurbelwelle verschraubt werden kann. Nach dem Lösen, dem Wegfall der Axialkraft, verschiebt sich die Abtriebsnabe selbsttätig durch die Federkraft der Tellerfeder in die Ausgangslage, in der die Abtriebsnabe in einer drehmomentübertragenden Position mit der Blechscheibe verzahnt ist. Die verdrehte, veränderte Lage der Abtriebsnabe ermöglicht einen ungehinderten Zugang zu den Befestigungsschrauben durch die Öffnungen der Abtriebsnabe, was eine Demontage sowie eine Wiedermontage des Drehschwingungsdämpfers vereinfacht.

Durch die Erfindung wird die Demontage des Drehschwingungsdämpfers vorteilhaft wesentlich vereinfacht und ermöglicht gleichzeitig eine Wiedermontage. Bei bisherigen beispielsweise verschraubten Bauteilen des mehrteiligen Sekundärteils erforderte eine Relativverdrehung der Abtriebsnabe gegenüber den Befestigungsschrauben aufgrund eines ausgelösten bzw. aktivierten Drehmomentbegrenzers einen hohen Montageaufwand bzw. den Einsatz von Spezialwerkzeugen, um die Abtriebsnabe wieder in eine Position zu bringen, die einen ungehinderten Zugang zu den Befestigungsschrauben ermöglicht. Abweichend dazu kann mit dem erfindungsgemäßen Konzept eine Lageübereinstimmung von der Abtriebsnabe mit den Befestigungsschrauben mittels einer einfachen Maßnahme erfolgen, die kein spezielles Werkzeug erfordert. Aufgrund der vereinfachten Demontage kann mit der Erfindung ein entscheidender Kostenvorteil realisiert werden.

In einer bevorzugten Ausführungsform der Erfindung ist vorgesehen, dass der Drehmomentbegrenzer eine mittels gekröpfter Abschnitte der Führungsscheibe und einer Stützscheibe axial begrenzte, radial in Richtung der Federdämpfereinrichtung offene, für den Trägerflansch sowie für Reibbeläge bestimmte U-förmig gestaltete Aufnahme bildet. Durch die miteinander verbundenen, vorzugsweise vernieteten Bauteile gebildete Aufnahme stellt sich eine geschützte Lage der Reibbeläge ein, die sich positiv auf die Lebensdauer des Drehmomentbegrenzers auswirkt.

Gemäß einer bevorzugten Ausgestaltung schließt der Drehmomentbegrenzer einen Trägerflansch ein, an dem beidseitig ein scheibenartig gestalteter, gefetteter oder ge-ölter Reibbelag fixiert ist. Im Einbauzustand sind die Reibbeläge an Kontaktflächen der Führungsscheibe und der Stützscheibe kraftbeaufschlagt geführt. Aufgrund der in Richtung der Federdämpfereinrichtung offenen Aufnahme des Drehmomentbegrenzers werden im Betriebszustand des Drehschwingungsdämpfers die Reibbeläge von dem auch Bogenfederfett genannten Schmiermittel der Federdämpfereinrichtung geschmiert. Durch die Einbaulage und die Schmierung der Reibbeläge ist ein vorteilhaft geringstreuender Reibwert des Drehmomentbegrenzers über die Lebensdauer des Drehschwingungsdämpfers realisierbar. Alternativ kann ein beispielsweise von den Bauteilen des Primärteils und des Sekundärteils begrenzter Ringraum mit Schmierstoff gefüllt werden, zur Bildung eines Schmierstoffreservoirs, von dem auch eine Schmierung der Reibbeläge erfolgt.

Eine bevorzugte weitere Ausführungsform der Erfindung sieht vor, dass zwischen der Führungsscheibe und der verzahnten Blechscheibe eine Tellerfedermembran eingesetzt ist, die radial außenseitig über einen Reibring innenseitig an einem Primärdeckel des Primärteils kraftschlüssig abgestützt ist. Weiterhin bildet die Tellerfedermembran einen radial innenseitigen, den Reibring stirnseitig abdeckenden Abschnitt, an dem die Abtriebsnabe zentriert axial abgestützt ist. Die auch Tellerfederdichtmembran genannte Membran dient zur Abdichtung des Federraums von der Federdämpfereinrichtung und gleichzeitig des Drehmomentbegrenzers und verhindert wirksam das Eindringen von Schmutz oder Wasser. Außerdem übt die Tellerfedermembran eine Axialkraft auf die Blechscheibe und somit auf den Drehmomentbegrenzer aus.

Eine vorteilhafte Ausgestaltung der Erfindung umfasst Nietverbindungen, über die wesentliche Bauteile des Sekundärteils zu einer Baueinheit zusammengefügt sind. Dazu sind symmetrisch umfangsverteilt Nieten vorgesehen, mit denen die Stützscheibe, die Führungsscheibe, die Tellerfedermembran, die Blechscheibe sowie die Abtriebsnabe verbunden sind. Zumindest ein Niet ist als ein Stufenniet ausgebildet, an dessen Nietkopf die Tellerfeder abgestützt ist, die gegenseitig die Abtriebsnabe kraftbeaufschlagen. Bevorzugt sind zur Erzielung einer gleichmäßigen Abstützung der Tellerfeder drei oder mehr Stufennieten vorgesehen.

Gemäß einer weiteren Ausführungsform der Erfindung kann zur alternativen Zentrierung des Sekundärteils der Drehschwingungsdämpfer einen radial in Richtung der Drehachse des Drehschwingungsdämpfers positionierten Reibring einschließen. Dazu bietet es sich an, den mit der Abtriebsnabe in einer Wirkverbindung stehenden Reibring an einem Trägerring zu koppeln, der gemeinsam mit dem Primärteil über die Befestigungsschrauben an der Kurbelwelle verschraubt ist. Die Zentrierung und / oder axiale Abstützung der Abtriebsnabe ist folglich radial unterhalb der Befestigungsschrauben platziert. Unabhängig von dem im Drehschwingungsdämpfer eingesetzten Trägerring ist der zugehörige Reibring bevorzugt stoffschlüssig beispielsweise mittels Kleben oder Vulkanisieren lagefixiert. Alternativ oder ergänzend dazu bietet sich eine formschlüssige Befestigung an.

Der erfindungsgemäß einfach demontierbare und montierbare, mit einem Drehmomentbegrenzer sowie bei Bedarf mit einem Vordämpfer bestückte Drehschwingungsdämpfer ist bevorzugt für Hybridanwendungen geeignet. Ein derartiger, auch als Hybridmodul zu bezeichnender Drehschwingungsdämpfer ist dazu in einem Antriebsstrang von einem Kraftfahrzeug integriert, das alternativ von einer Brennkraftmaschine oder einem Elektromotor angetrieben wird oder den Antrieb gleichzeitig über beide Antriebsquellen erfährt. Die Erfindung erfüllt die Forderung von Kraftfahrzeugherstellern, die für DHT-Hybridanwendungen (dedictated hybrid transmission) bestimmte Drehschwingungsdämpfer mit Drehmomentbegrenzern zu bestücken, um insbesondere Bauteile innerhalb des Getriebes vor Überlast zu schützen.

Als Maßnahme zur Erzielung einer kostengünstigen Fertigung bietet es sich an, zumindest die Bauteile des Sekundärteils wie Trägerflansch, Stützscheibe, Führungsscheibe, Blechscheibe sowie Abtriebsnabe als ein Umformteil oder Stanzteil zu gestalten. Mit diesen Verfahren können ergänzend zu dem Sekundärteil auch die Bauteile des Primärteils gewichtsoptimiert und mit einer ausreichenden Bauteilsteifigkeit spanlos kostengünstig hergestellt werden, mit denen weiterhin gegenüber vergleichbar gestalteten Gussteilen auch ein Gewichtsvorteil erreicht werden kann.

Ein weiterer Aspekt der Erfindung betrifft ein Verfahren, mit dem der Drehschwingungsdämpfer an der Kurbelwelle einer Brennkraftmaschine demontierbar ist. Ein erster Verfahrensschritt sieht vor, eine Verzahnung zwischen zwei Bauteilen des Sekundärteils mittels einer axialen Verschiebung zu unterbrechen. Dazu wird die Abtriebsnabe zunächst durch Ziehen, einer entgegen einer Federkraft gerichteten Tellerfederkraft, gegenüber einer Blechscheibe verschoben. In einem nächsten Verfahrensschritt wird die Abtriebsnabe bis in eine Position verdreht, in der sich eine Lageübereinstimmung zwischen Öffnungen oder Ausnehmungen der Abtriebsnabe mit den Befestigungsschrauben des Drehschwingungsdämpfers einstellt. Ohne aufgebrachte Axialkraft verschiebt sich die Abtriebsnabe selbsttätig in Richtung der Blechscheibe, wodurch diese Bauteile wieder über die Verzahnung drehfixiert formschlüssig verbunden sind. In dieser Position können die Befestigungsschrauben mittels eines normalen, durch die Ausnehmungen der Abtriebsnabe geführten Werkzeugs gelöst werden. Außerdem ermöglicht diese Abtriebsnabenposition eine Wiedermontage des Drehschwingungsdämpfers.

Die Erfindung wird nachfolgend anhand von zwei bevorzugten Ausführungsformen unter Bezugnahme auf die beigefügten Figuren erläutert. Die Erfindung ist jedoch nicht auf die gezeigten Ausführungsbeispiele beschränkt. Gleiche Bauteile sind in den Figuren mit den gleichen Bezugszeichen gekennzeichnet. Dabei zeigen:
- Fig. 1: eine erste Ausführungsform von einem erfindungsgemäß aufgebauten Drehschwingungsdämpfer in einem Halbschnitt;
- Fig. 2: eine Detailansicht des in Fig. 1 gezeigten Drehschwingungsdämpfers in einem vergrößerten Maßstab;
- Fig. 3: in einer vergrößerten Darstellung eine Verzahnung zwischen einer Abtriebsnabe und einer Blechscheibe des in der Fig. 1 gezeigten Drehschwingungsdämpfers;
- Fig. 4: eine abtriebsseitige Ansicht des in Fig. 1 gezeigten Drehschwingungsdämpfers;
- Fig. 5: eine zweite Ausführungsform von einem erfindungsgemäß aufgebauten Drehschwingungsdämpfer in einem Halbschnitt; und
- Fig. 6: eine Detailansicht des in Fig. 5 gezeigten Drehschwingungsdämpfers in einem vergrößerten Maßstab.

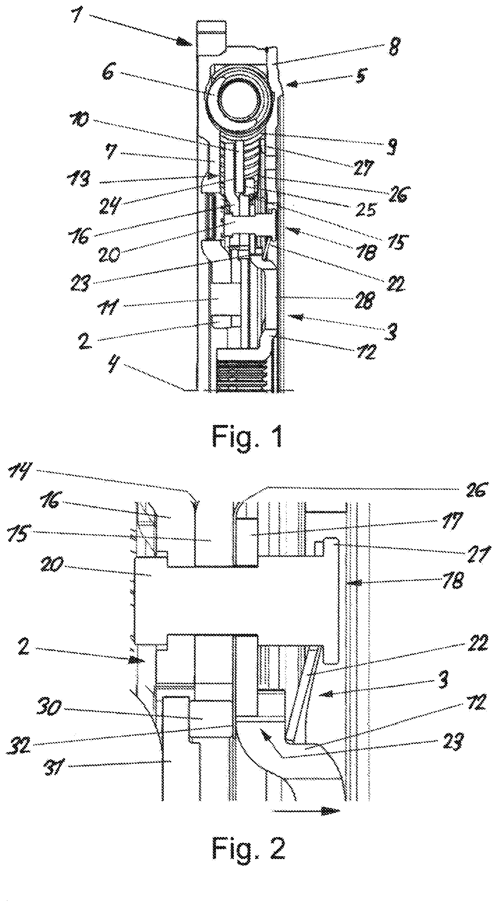

Die Fig. 1 zeigt eine erste Ausführungsform von einem erfindungsgemäßen, als Zweimassenschwungrad aufgebauten Drehschwingungsdämpfer 1, bestehend aus einem Primärteil 2 und einem Sekundärteil 3, die um die Drehachse 4 gemeinsam drehbar und relativ zueinander begrenzt verdrehbar sind. Zwischen dem Primärteil 2 und dem Sekundärteil 3 ist eine Federdämpfereinrichtung 5 mit als Bogenfedern 6 ausgeführten mechanischen Energiespeichern wirksam. Der für einen Antriebsstrang eines brennkraftmaschinengetriebenen Kraftfahrzeugs, insbesondere für eine DHT-Hybridanwendung bestimmte Drehschwingungsdämpfer 1 hat die Aufgabe, von der Brennkraftmaschine ausgelöste Drehungleichförmigkeiten in dem Antriebsstrang zu dämpfen. Das Primärteil 2 umfasst ein Flanschelement 7, welches radial außenseitig einstückig mit einem Primärdeckel 8 verbunden ist, die gemeinsam einen zur Aufnahme der Bogenfedern 6 bestimmten Federraum 9 umschließen. Dabei sind die Bogenfedern 6 mit einem Federende an Anschlägen (nicht gezeigt) des Primärteils 2 und mit dem weiteren Federende an einem Trägerflansch 10 des mehrteilig aufgebauten Sekundärteils 3 abgestützt.

Im Einbauzustand ist das Primärteil 2 des Drehschwingungsdämpfers 1 mittels einer Vielzahl von Schrauben an einer Kurbelwelle (nicht gezeigt) einer Brennkraftmaschine befestigt, die in zugehörige Bohrungen 11 von dem Flanschelement 7 des Primärteils 2 eingesetzt sind. Das Sekundärteil 3 ist über eine Abtriebsnabe 12 vorzugsweise mit einem Verzahnungsprofil formschlüssig mit einer Getriebeeingangswelle (nicht gezeigt) verbunden. In dem Drehschwingungsdämpfer 1 ist ein als Reibeinrichtung aufgebauter Drehmomentbegrenzer 13 integriert, der dazu vorgesehen ist, insbesondere dem Drehschwingungsdämpfer 1 nachgeordnete Bauelemente auf ein betriebssicher übertragbares Drehmoment zu begrenzen. Mithilfe des dem Sekundärteil 3 zwischen dem Trägerflansch 10 und der Abtriebsnabe 12 zugeordneten Drehmomentbegrenzers 13 ist ein Drehmoment bis zu einem Maximaldrehmoment reibschlüssig zwischen dem Primärteil 2 und dem Sekundärteil 3 übertragbar. Sobald das definierte maximale Drehmoment überschritten ist, wird eine Drehmomentübertragung durch den Drehmomentbegrenzer 13 unterbrochen.

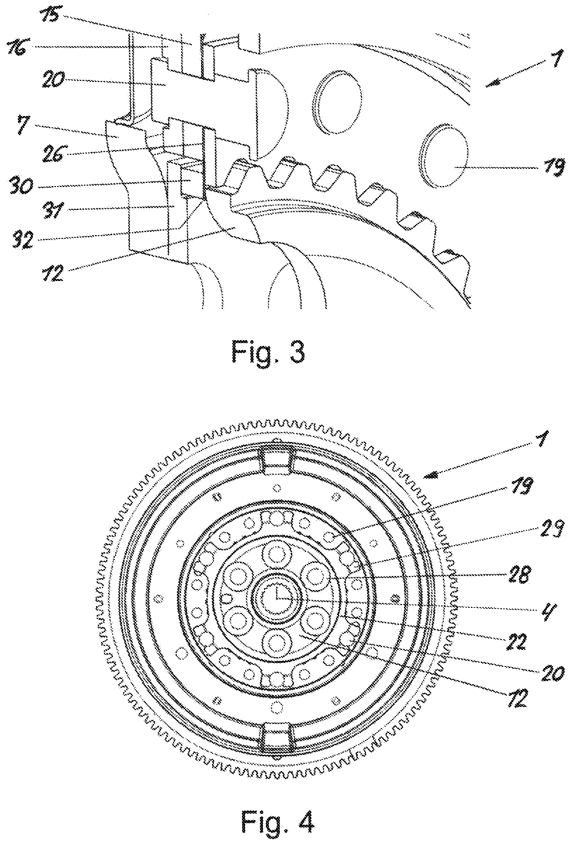

Der Drehmomentbegrenzer 13 wird gebildet aus dem Trägerflansch 10, der radial innenseitig in eine zur Federdämpfereinrichtung 5 ausgerichtete, offene, U-förmige Aufnahme 14 eingreift, die axial von entgegengesetzt gekröpften Abschnitten einer Führungsscheibe 15 und einer Stützscheibe 16 begrenzt ist. Dabei ist der Trägerflansch 10 beidseitig über einen scheibenartigen, geölten Reibbelag 24, 25 an der Führungsscheibe 15 und der Stützscheibe 16 geführt. Aufgrund des radial nach unten offenen, zumindest teilweise mit einem Schmierstoff gefüllten Federraums 9 werden im Betriebszustand des Drehschwingungsdämpfers 1 die Reibbeläge 24, 25 geschmiert. Zur Abdichtung des Federraums 9 dient eine Tellerfedermembran 26, die radial außenseitig über eine Reibscheibe 27 innenseitig an dem Primärdeckel 8 dichtend abgestützt ist. Die Stützscheibe 16, die Führungsscheibe 15, die Tellerfedermembran 26 sowie eine abtriebsseitig der Führungsscheibe 15 zugeordnete Blechscheibe 17 sind über Nietverbindungen 18 zusammengefügt, deren Nieten 19 umfangsverteilt (gezeigt in Fig.4) angeordnet sind. Einzelne Nietverbindungen 18 werden durch Stufennieten 20 gebildet, an deren Nietköpfen 21 jeweils eine Tellerfeder 22 abgestützt ist, die gegenseitig die Abtriebsnabe 12 kraftschlüssig beaufschlagt. Aufgrund der Abstützung an dem Nietkopf 21 ist eine Axialverschiebung der Abtriebsnabe 12 in Pfeilrichtung entgegen der Kraftrichtung der Tellerfeder 22 möglich, wodurch sich eine Verzahnung 23 zwischen der Abtriebsnabe 12 und der Blechscheibe 17 löst. Zur Zentrierung des Sekundärteils 3 (gezeigt in Fig. 2) ist die Abtriebsnabe 12 axial über einen Abschnitt 32 der Tellerfedermembran 26 mittelbar an einem Reibring 30 abgestützt, der über einen Trägerring 31 mit dem Primärteil 2 verbunden ist.

Die Fig. 2 bis Fig. 4 zeigen in vergrößerten Abbildungen weitere konstruktive Details, die eine Axialverschiebung der Abtriebsnabe 12 und ein damit verbundenes Lösen der Verzahnung 23 ermöglichen. Die Länge des Stufenniets 20 erlaubt eine axiale Verschiebung der Abtriebsnabe 12 bis zu einer vollständigen Trennung der Verzahnung 23. Nach erfolgter Axialverschiebung der Tellerfeder 22 bis zu einem Versatz der Abtriebsnabe 12 gegenüber der Blechscheibe 17 ist die Abtriebsnabe 12 bis zu einer Lageübereinstimmung von Öffnungen 28 der Abtriebsnabe 12 mit den Bohrungen 11 in dem Primärteil 2 verdrehbar (gezeigt in Fig. 1). In dieser Position, in der sich eine Flucht zwischen den Öffnungen 28 und den Bohrungen 11 für die Befestigungsschrauben (nicht gezeigt) einstellt, ist eine einfache Demontage des Drehschwingungsdämpfers 1 möglich, da die Befestigungsschrauben ohne ein spezielles Werkzeug lösbar sind. Nach Wegfall der für die Axialverschiebung aufgebrachten Kraft wird die Antriebsnabe 12 durch die Tellerfeder 22 selbsttätig in Richtung der Blechscheibe 17 und zur Verrastung in die Verzahnung 23 verschoben. Aufgrund der veränderten Positionierung der Antriebsnabe 12 gegenüber dem Primärteil 2 kann auch eine vereinfachte Wiedermontage des Drehschwingungsdämpfers 1 erfolgen. In Fig. 3 ist ein Ausschnitt des Drehschwingungsdämpfers 1 gezeigt, der insbesondere die Einbaulage der außenverzahnten Abtriebsnabe 12 zeigt. Die Fig. 4 verdeutlicht die Gestaltung der Tellerfeder 22, die partiell mittels Laschen 29 an sechs symmetrisch umfangsverteilten Stufennieten 20 abgestützt ist.

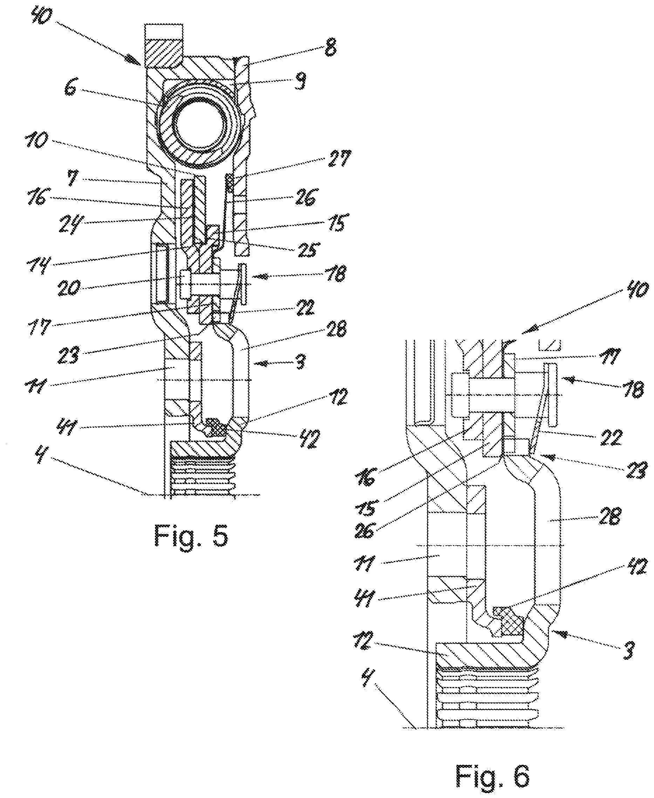

Die Fig. 5 und Fig. 6 veranschaulichen eine alternative Ausführungsform von einem erfindungsgemäß aufgebauten Drehschwingungsdämpfer 40, wobei die mit dem Drehschwingungsdämpfer 1 übereinstimmenden Bauteile mit gleichen Bezugszeichen versehen sind. Die folgende Beschreibung ist weitestgehend auf unterschiedliche Ausgestaltungen beschränkt.

Der Drehschwingungsdämpfer 40 zeigt eine zu der Öffnung 28 der Abtriebsnabe 12 radial in Richtung der Drehachse 4 versetzt positionierte Zentrierung des Sekundärteils 3. Entsprechend dazu ist der dem Primärteil 2 zugeordnete Trägerring 41 mit einem gekröpften, den Reibring 42 aufnehmenden Abschnitt versehen, an dem die Abtriebsnabe 12 unmittelbar abgestützt ist.

### Bezugszeichenliste

- 1: Drehschwingungsdämpfer
- 2: Primärteil
- 3: Sekundärteil
- 4: Drehachse
- 5: Federdämpfereinrichtung
- 6: Bogenfeder
- 7: Flanschelement
- 8: Primärdeckel
- 9: Federraum
- 10: Trägerflansch
- 11: Bohrung
- 12: Abtriebsnabe
- 13: Drehmomentbegrenzer
- 14: Aufnahme
- 15: Führungsscheibe
- 16: Stützscheibe
- 17: Blechscheibe
- 18: Nietverbindung
- 19: Niet
- 20: Stufenniet
- 21: Nietkopf
- 22: Tellerfeder
- 23: Verzahnung
- 24: Reibbelag
- 25: Reibbelag
- 26: Tellerfedermembran
- 27: Reibscheibe
- 28: Öffnung
- 29: Lasche
- 30: Reibring
- 31: Trägerring
- 32: Abschnitt
- 40: Drehschwingungsdämpfer
- 41: Trägerring
- 42: Reibring

## Patentansprüche

1. Drehschwingungsdämpfer (1, 40) eines brennkraftmaschinengetriebenen Kraftfahrzeugs, der als ein Zweimassenschwungrad aufgebaut ist und der ein an einer Kurbelwelle befestigtes Primärteil (2) sowie ein einer Abtriebsseite zugeordnetes Sekundärteil (3) umfasst, die gemeinsam um eine Drehachse (4) drehbar und relativ zueinander verdrehbar angeordnet sind und zwischen denen im Drehmomentfluss eine Federdämpfereinrichtung (5) angeordnet ist, wobei das mehrteilig aufgebaute Sekundärteil (3) einen Drehmomentbegrenzer (13) einschließt, dessen Trägerflansch (10) über zumindest einen Reibbelag (24, 25) sowie eine Führungsscheibe (15) mittelbar mit einer Abtriebsnabe (12) gekoppelt ist, wobei eine Axialverschiebung der Abtriebsnabe (12) gegen eine Federkraft zumindest einer Tellerfeder (22) eine Verzahnung (23) löst und eine Drehmomentübertragung des Drehschwingungsdämpfers (1, 40) unterbricht und die Abtriebsnabe (12) anschließend bis zu einer Lageübereinstimmung von Öffnungen (28) der Abtriebsnabe (12) mit Bohrungen (11) des Primärteils (2) verdrehbar ist, **dadurch gekennzeichnet, dass** die Abtriebsnabe (12) einerseits an einem Reibring (30, 42) unmittelbar oder mittelbar axial abgestützt ist, wobei der Reibring (30, 42) über einen Trägerring (31, 41) dem Primärteil (2) zugeordnet ist und die Abtriebsnabe (12) andererseits über die Verzahnung (23) mit einer der Führungsscheibe (15) vorgelagerten und mit der Führungsscheibe verbundenen sowie verzahnten Blechscheibe (17) formschlüssig verbunden ist.

2. Drehschwingungsdämpfer (1, 40) nach Anspruch 1, **dadurch gekennzeichnet, dass** der Drehmomentbegrenzer (13) eine mittels entgegengesetzt gekröpfter Abschnitte der Führungsscheibe (15) und einer Stützscheibe (16) axial begrenzte, in Richtung der Federdämpfereinrichtung (5) offene Aufnahme (14) aufweist, in die der Trägerflansch (10) sowie die Reibbeläge (24, 25) eingesetzt sind.

3. Drehschwingungsdämpfer (1, 40) nach Anspruch 2, **dadurch gekennzeichnet, dass** der Drehmomentbegrenzer (13) beidseitig von dem Trägerflansch (10) positionierte, scheibenartig gestaltete, gefettete oder geölte Reibbeläge (24, 25) einschließt.

4. Drehschwingungsdämpfer (1, 40) nach einem der Ansprüche 1 bis 3, **dadurch gekennzeichnet, dass** zwischen der Führungsscheibe (15) und der verzahnten Blechscheibe (17) eine Tellerfedermembran (26) eingesetzt ist, die radial außenseitig über eine Reibscheibe (27) an einem Primärdeckel (8) des Primärteils (2) abgestützt ist und die Tellerfedermembran (26) einen radial innenseitigen, den Reibring (30) stirnseitig abdeckenden Abschnitt (32) bildet, an dem die Abtriebsnabe (12) axial abgestützt ist.

5. Drehschwingungsdämpfer (1, 40) nach einem der Ansprüche 1 bis 4, **dadurch gekennzeichnet, dass** die Führungsscheibe (15), die Stützscheibe (16), die Tellerfedermembran (26), die Blechscheibe (17) sowie die Abtriebsnabe (12) über Nietverbindungen (18) mit umlaufend angeordneten Nieten (19) zusammengefügt sind, wobei zumindest ein Niet als Stufenniet (20) ausgebildet ist, an dessen Nietkopf (21) die Tellerfeder (22) abgestützt ist.

6. Drehschwingungsdämpfer (1, 40) nach einem der Ansprüche 1 bis 5, **dadurch gekennzeichnet, dass** die Abtriebsnabe (12) über den Reibring (42) in Verbindung mit einem Trägerring (41) radial unterhalb von den Bohrungen (11) des Primärteils (2) axial abgestützt und zentriert ist.

7. Drehschwingungsdämpfer (1, 40) nach Anspruch 1 oder Anspruch 6, **dadurch gekennzeichnet, dass** der zur Zentrierung der Abtriebsnabe (12) eingesetzte Reibring (30, 42) stoffschlüssig und / oder formschlüssig an dem Trägerring (31, 41) dreh- und lagefixiert befestigt ist.

8. Drehschwingungsdämpfer (1, 40) nach einem der Ansprüche 1 bis 7, **dadurch gekennzeichnet, dass** der Drehschwingungsdämpfer (1, 40) mit integriertem Drehmomentbegrenzer (13) für Hybridanwendungen, insbesondere für DHT-Hybridanwendungen, vorgesehen ist.

9. Drehschwingungsdämpfer (1, 40) nach einem der Ansprüche 1 bis 8, **dadurch gekennzeichnet, dass** zumindest die Bauteile des Sekundärteils (3) wie die Führungsscheibe (15), die Stützscheibe (16), die Blechscheibe (17) und die Abtriebsnabe (12) als ein Umformteil oder Stanzteil gestaltet sind.

10. Verfahren zur Demontage und Montage eines Drehschwingungsdämpfers (1, 40), der mit einer Kurbelwelle einer Brennkraftmaschine verbunden ist, nach einem der Ansprüche 1 bis 9, **dadurch gekennzeichnet, dass** nach einer axialen Verschiebung der Abtriebsnabe (12) entgegen einer Federkraft der Tellerfeder (22) die Abtriebsnabe (12) in eine Position verdrehbar ist, wobei in einer Lageübereinstimmung zwischen Öffnungen (28) der Abtriebsnabe (12) mit Bohrungen (11) im Primärteil (2), die für die Befestigung des Drehschwingungsdämpfers (1, 40) bestimmt sind, eine Demontage und / oder eine Wiedermontage des Drehschwingungsdämpfers (1, 40) erfolgen kann.

## Claims

1. A torsional vibration damper (1, 40) of a motor vehicle driven by an internal combustion engine, which is constructed as a dual-mass flywheel and which comprises a primary part (2) fastened to a crankshaft and a secondary part (3) associated with an output side, which are arranged so as to be jointly rotatable about an axis of rotation (4) and rotatable relative to one another and between which a spring damper device (5) is arranged in the torque flow, wherein the secondary part (3) constructed of multiple parts includes a torque limiter (13), the support flange (10) of which is indirectly coupled to an output hub (12) via at least one friction lining (24, 25) and a guide disc (15), wherein an axial displacement of the output hub (12) against a spring force of at least one disc spring (22) releases a toothing (23) and interrupts a torque transmission of the torsional vibration damper (1, 40) and the output hub (12) can then be rotated until the positions of openings (28) of the output hub (12) coincide with bores (11) of the primary part (2), **characterized in that** the output hub (12), on the one hand, is axially supported directly or indirectly on a friction ring (30, 42), wherein the friction ring (30, 42) is associated with the primary part (2) via a support ring (31, 41), and the output hub (12), on the other hand, is connected in a form-fitting manner via the toothing (23) to a toothed sheet metal disc (17) which is located upstream of the guide disc (15) and is connected to the guide disc.

2. The torsional vibration damper (1, 40) according to claim 1, **characterized in that** the torque limiter (13) has a receptacle (14) which is axially limited by means of oppositely bent sections of the guide disc (15) and a support disc (16), is open in the direction of the spring damper device (5) and into which the support flange (10) and the friction linings (24, 25) are inserted.

3. The torsional vibration damper (1, 40) according to claim 2, **characterized in that** the torque limiter (13) includes greased or oiled friction linings (24, 25) of a disc-like design positioned on both sides of the support flange (10).

4. The torsional vibration damper (1, 40) according to any one of claims 1 to 3, **characterized in that** a disc spring diaphragm (26) is inserted between the guide disc (15) and the toothed sheet metal disc (17), which is supported radially on the outside via a friction disc (27) on a primary cover (8) of the primary part (2) and the disc spring diaphragm (26) forms a radially inner section (32) which covers the friction ring (30) on the end face and on which the output hub (12) is axially supported.

5. The torsional vibration damper (1, 40) according to any one of claims 1 to 4, **characterized in that** the guide disc (15), the support disc (16), the disc spring diaphragm (26), the sheet metal disc (17) and the output hub (12) are joined together via rivet connections (18) with circumferentially arranged rivets (19), wherein at least one rivet is designed as a step rivet (20), on the rivet head (21) of which the disc spring (22) is supported.

6. The torsional vibration damper (1, 40) according to any one of claims 1 to 5, **characterized in that** the output hub (12) is axially supported and centred via the friction ring (42) in conjunction with a support ring (41) radially below the bores (11) of the primary part (2).

7. The torsional vibration damper (1, 40) according to claim 1 or claim 6, **characterized in that** the friction ring (30, 42) used for centring the output hub (12) is fastened so as to be rotationally and positionally fixed to the support ring (31, 41) in a materially bonded and/or form-fitting manner.

8. The torsional vibration damper (1, 40) according to any one of claims 1 to 7, **characterized in that** the torsional vibration damper (1, 40) with an integrated torque limiter (13) is provided for hybrid applications, in particular for DHT hybrid applications.

9. The torsional vibration damper (1, 40) according to any one of claims 1 to 8, **characterized in that** at least the components of the secondary part (3), such as the guide disc (15), the support disc (16), the sheet metal disc (17) and the output hub (12), are designed as a formed part or stamped part.

10. A method for disassembling and assembling a torsional vibration damper (1, 40), which is connected to a crankshaft of an internal combustion engine, according to any one of claims 1 to 9, **characterized in that**, after an axial displacement of the output hub (12) against a spring force of the disc spring (22), the output hub (12) can be rotated into a position, wherein a disassembly and/or reassembly of the torsional vibration damper (1, 40) can take place when the positions of openings (28) of the output hub (12) coincide with bores (11) in the primary part (2), which are intended for fastening the torsional vibration damper (1, 40).

## Revendications

1. Amortisseur de vibrations torsionnelles (1, 40) d'un véhicule automobile entraîné par un moteur à combustion interne, qui est réalisé sous la forme d'un volant bimasse et qui comprend une partie primaire (2) fixée à un vilebrequin et une partie secondaire (3) associée à un côté sortie, qui peuvent tourner ensemble autour d'un axe de rotation (4) et qui sont disposés de manière à pouvoir tourner l'un par rapport à l'autre et entre lesquels un dispositif amortisseur à ressort (5) est disposé dans le flux de couple, la partie secondaire (3) réalisée en plusieurs parties comprenant un limiteur de couple (13) dont le flasque de support (10) est couplé indirectement par l'intermédiaire d'au moins une garniture de friction (24, 25) et un disque de guidage (15) à un moyeu de sortie (12), un déplacement axial du moyeu de sortie (12) à l'encontre d'une force de ressort d'au moins un ressort à lames (22) libérant une denture (23) et interrompant une transmission du couple de l'amortisseur de vibrations torsionnelles (1, 40) et le moyeu de sortie (12) pouvant alors tourner jusqu'à ce que les ouvertures (28) du moyeu de sortie (12) coïncident avec des alésages (11) de la partie primaire (2), **caractérisé en ce que** le moyeu de sortie (12) d'une part vient directement ou indirectement axialement en appui sur un anneau de friction (30 , 42), l'anneau de friction (30, 42) étant associé à la partie primaire (2) par l'intermédiaire d'un anneau de support (31, 41) et le moyeu de sortie (12), d'autre part, est relié par complémentarité de forme, par l'intermédiaire de la denture (23), à un disque en tôle (17) situé en amont du disque de guidage (15), relié au disque de guidage et denté.

2. Amortisseur de vibrations torsionnelles (1, 40) selon la revendication 1, **caractérisé en ce que** le limiteur de couple (13) présente un logement (14) délimité axialement au moyen de sections coudées opposées du disque de guidage (15) et d'un disque d'appui (16), logement qui est ouvert en direction du dispositif amortisseur à ressort (5), logement dans lequel sont insérés le flasque de support (10) et les garnitures de friction (24, 25).

3. Amortisseur de vibrations torsionnelles (1, 40) selon la revendication 2, **caractérisé en ce que** le limiteur de couple (13) comprend des garnitures de friction (24, 25) en forme de disque, graissées ou huilées, positionnées de part et d'autre du flasque de support (10).

4. Amortisseur de vibrations torsionnelles (1, 40) selon l'une quelconque des revendications 1 à 3, **caractérisé en ce qu'**une membrane à rondelle-ressort (26) est insérée entre le disque de guidage (15) et le disque en tôle denté (17), membrane qui vient radialement en appui à l'extérieur sur un couvercle primaire (8) de la partie primaire (2), par l'intermédiaire d'un disque de friction (27), et la membrane à rondelle-ressort (26) forme une section (32) située radialement à l'intérieur et recouvrant frontalement l'anneau de friction (30), sur laquelle section le moyeu de sortie (12) vient axialement en appui.

5. Amortisseur de vibrations torsionnelles (1, 40) selon l'une quelconque des revendications 1 à 4, **caractérisé en ce que** le disque de guidage (15), le disque d'appui (16), la membrane à rondelle-ressort (26), le disque en tôle (17) et le moyeu de sortie (12) sont assemblés par l'intermédiaire de liaisons rivetées (18) avec des rivets (19) disposés circonférentiellement, au moins un rivet étant conçu comme un rivet goujon (20), sur la tête de rivet (21) duquel la rondelle-ressort (22) vient en appui.

6. Amortisseur de vibrations torsionnelles (1, 40) selon l'une quelconque des revendications 1 à 5, **caractérisé en ce que** le moyeu de sortie (12) vient en e appui axialement et est centré, par l'intermédiaire de l'anneau de friction (42) en liaison avec un anneau de support (41) radialement en dessous des alésages (11) de la partie primaire (2).

7. Amortisseur de vibrations torsionnelles (1, 40) selon la revendication 1 ou la revendication 6, **caractérisé en ce que** l'anneau de friction (30, 42) utilisé pour centrer le moyeu de sortie (12) est fixé à l'anneau de support (31, 41) de manière fixée en rotation et en position par liaison de matière et/ou par complémentarité de forme.

8. Amortisseur de vibrations torsionnelles (1, 40) selon l'une quelconque des revendications 1 à 7, **caractérisé en ce que** l'amortisseur de vibrations torsionnelles (1, 40) avec limiteur de couple (13) intégré est prévu pour des applications hybrides, en particulier pour des applications hybrides DHT.

9. Amortisseur de vibrations torsionnelles (1, 40) selon l'une quelconque des revendications 1 à 8, **caractérisé en ce qu'**au moins les composants de la partie secondaire (3) tels que le disque de guidage (15), le disque d'appui (16), le disque en tôle (17) et le moyeu de sortie (12) sont réalisés sous forme de pièce moulée ou de pièce estampée.

10. Procédé de démontage et de montage d'un amortisseur de vibrations torsionnelles (1, 40), relié à un vilebrequin d'un moteur à combustion interne, selon l'une quelconque des revendications 1 à 9, **caractérisé en ce que**, après un déplacement axial du moyeu de sortie (12) à l'encontre une force élastique de la rondelle-ressort (22), le moyeu de sortie (12) peut être tourné dans une position, un démontage et/ou un remontage de l'amortisseur de vibrations torsionnelles (1, 40) pouvant intervenir lorsque les ouvertures (28) du moyeu de sortie (12) coïncident avec des alésages (11) dans la partie primaire (2), qui sont destinés à la fixation de l'amortisseur de vibrations torsionnelles (1, 40).
